# EUROPEAN PATENT APPLICATION

(11) **EP 1 845 009 A1**
(43) Date of publication of application: **17.10.2007**
(21) Application number: 06712713.4
(22) Date of filing: 31.01.2006
(51) Int. Cl.: B62D 5/04

(54) **ELECTRIC POWER STEERING DEVICE**

(30) Priority: 31.01.2005 JP 2005024177; 29.03.2005 JP 2005095418; 13.04.2005 JP 2005115883
(71) Applicant: NSK LTD., Shinagawa-ku, Tokyo 141-8560 (JP)
(72) Inventor: SEGAWA, Toru c/o NSK Steering Systems Co., Ltd., Gunma 371-8528 (JP); EDA, Hiroshi c/o NSK Steering Systems Co., Ltd., Gunma 371-8528 (JP); YAMAMOTO, Takeshi c/o NSK St. Systems Co., Ltd., Gunma 371-8528 (JP)
(74) Representative: Grünecker, Kinkeldey, Stockmair & Schwanhäusser Anwaltssozietät
(86) International application number: PCT/JP2006/301570
(87) International publication number: WO 2006/080529

(57) **Abstract**

In an electric power steering device, the performances of a reduction unit and a rack unit are easily warranted independently of each other, the reduction unit and the rack unit are simply assembled, the degree of freedom for the fastened positions of the reduction unit and a rack housing are raised, and advantage of the layout are taken.

Moreover, the output shaft 7 (or the mandrel of a worm wheel) of a reduction mechanism and a pinion shaft 1 can be separated to warrant the reduction unit and the rack unit in their performances independently of each other. Moreover, a cover housing CH and a gear housing GH for housing the output shaft 7 of the reduction mechanism and the rack housing RH for housing the pinion shaft 1 are fastened by common bolt 14 and nut 15. This fastening makes it possible to augment the degree of freedom for the fastened positions and the rack housing RH. That is, it is possible to augment the degree of freedom for the fastened positions of the reduction unit and the rack housing RH.

Moreover, the upper end portion 10 (or a male fitting portion) of the pinion shaft 1 and the lower end portion 11 (or a female fitting portion) of the output shaft 7 are made separable, and the mandrel (7) and the output shaft 7 are molded integrally with each other so that the reduction unit and the rack unit can be warranted in their performances independently of each other. In the joint between an EPS unit and the rack-and-pinion, the EPS unit is positioned in the female fitting portion 11. On the contrary, the male type fitting portion 10 is preferred on the side of the pinion shaft 1.

Moreover, the fastened portions of the gear housing GH and the cover housing CH, and the fastened portions of the reduction unit assembly (GH, CH) and the rack housing RH are set to have different thread diameters. Specifically, the bolt 14 has the thread (or the diametrically larger portion 14a) for fastening the cover housing CH and the thread (or the diametrically smaller portion 14b) for fastening the rack housing RH. As a result, the loosening torque and the fastening torque can be made different to prevent the screw (or the diametrically larger portion 14a) fastened at first from becoming loose.

## Description

### Technical Field

The present invention relates to a pinion-assisted type electric power steering device, in which an auxiliary steering torque is generated from an electric motor in accordance with a steering torque applied to a steering wheel and is decelerated by a reduction mechanism and transmitted to a pinion shaft of a steering mechanism, and, more particularly, to an improvement in a method for assembling the pinion-assisted type electric power steering device.

### Background Art

In the steering system of an automobile, there has been widely adopted the so-called "power steering device" for performing a steering assist by using an external power source. In the prior art, a power source for the power steering device is exemplified by a vane type hydraulic pump, which is mostly driven by an engine. In the power steering device of this kind, the hydraulic pump is always driven to have a high drive loss (e.g., several to ten and several horse powers) at the engine. This makes it difficult to adopt the power steering device in a small automobile of a small displacement, and impossible to avoid an unignored reduction in the mileage even for an automobile of a relatively large displacement.

In order to solve those problems, therefore, there is recently noted an electric power steering device (as will be abbreviated as "EPS") using an electric motor as a power source. The EPS uses a car-mounted battery as the electric power source of the electric motor so that it has no direct drive engine loss. Since the electric motor is activated only at the steering assisting time, it is possible to attain advantages that the drop of the mileage can be suppressed, and that the electronic control can be remarkably facilitated.

In the EPS, in accordance with the steering torque applied to the steering wheel, the auxiliary steering torque is generated from the electric motor and is decelerated by a power transmission mechanism (or a reduction mechanism) so that it is transmitted to the output shaft of the steering mechanism.

In the EPS using a worm gear mechanism as the power transmission mechanism (or the reduction mechanism), a worm wheel is made to mesh with the worm of the electric motor on the drive shaft side, and is fitted on the output shaft (e.g., a pinion shaft or a column shaft) of the steering mechanism.

In a pinion-assisted type electric power steering device, as disclosed in Patent Document 1, the pinion shaft is integrated with the output shaft of the reduction unit. In a general configuration, the output shaft and the pinion shaft are made removable from the rack housing of the rack unit.

On the other hand, the cover housing and the gear housing are fastened by a bolt, and the gear housing and the rack housing are fastened by another bolt.
Patent Document 1: JP-A-8-175403

A mandrel of the worm wheel is made separate and fixed by a press-fitting or the like in the output shaft and the pinion shaft integrated.

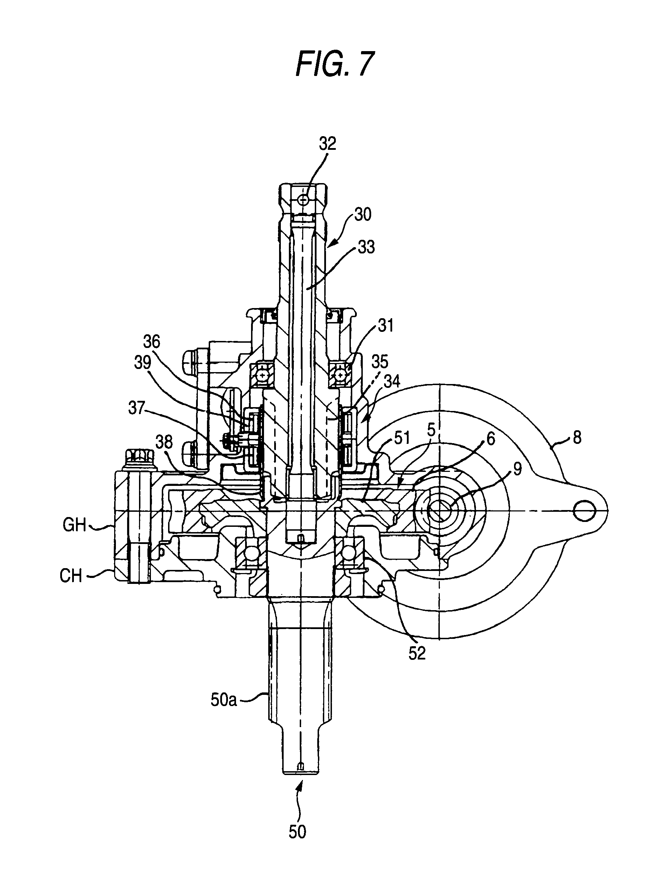

Fig. 7 is a longitudinal section of a pinion-assisted type electric power steering device according to the conventional art.

A housing is constituted to include a gear housing GH on the upper side of a vehicle, and a cover housing CH covering the gear housing GH.

A worm reduction unit is housed in the gear housing GH and the cover housing CH. The worm reduction unit has its worm wheel 5 composed of a mandrel 51 and a gear tooth 6 molded integrally of a resin. Here, the gear tooth 6 is driven by a worm 9 connected to an electric motor 8.

The electric power steering device has its output shaft integrated with a pinion shaft 50. The separate mandrel 51 of the worm wheel 5 is fixed by a press-fitting or the like on the integral pinion shaft 50 (or the output shaft). The pinion shaft 50 (or the output shaft) is turnably supported in the cover housing CH by a bearing 52.

An input shaft 30 is turnably supported in the gear housing GH through a bearing 31.

The input shaft 30 is connected to a steering wheel through a not-shown steering shaft. A torsion bar 33 is connected at its upper end to the input shaft 30 through a pin 32 and is connected by the press-fitting to the upper end portion of the pinion shaft 50 (or the output shaft).

A torque sensor 34 for detecting the torque to act on the torsion bar 33 is composed of a sensor shaft portion 35, detection coils 36 and 37 and a cylindrical member 38. The sensor shaft portion 35 is formed at the lower end of the input shaft 30, and the detection coils 36 and 37 are arranged in a yoke 39 press-fitted in the inner side of the sensor box. The cylindrical member 38 is arranged between the sensor shaft portion 35 and the detection coils 36 and 37.

The cylindrical member 38 is fixed on the pinion shaft 50 (or the output shaft), and a plurality of axially extending ridges are formed equidistantly in the circumferential direction on the sensor shaft portion 35. A plurality of rectangular apertures are formed in the cylindrical member 38 so equidistantly in the circumferential direction as to confront the detection coils 36 and 37.

When the steering wheel is operated so that the input shaft 30 is turned, its turning force is transmitted through the torsion bar 33 to the pinion shaft 50 (or the output shaft). At this time, a torsion is caused at the torsion bar 33 connecting the input shaft 30 and the pinion shaft 50 (or the output shaft) by the resistance on the steering wheel side, so that relative turns occur between the ridges of the surface of the sensor shaft portion 35 and the apertures of the cylindrical member 38. As a result of these relative turns, the magnetic flux to occur in the sensor shaft portion 35 increases/decreases, and this increase/decrease is detected as the change in inductance by the detection coils 36 and 37. The torque to act on the torsion bar 33 is detected from that detection result, and the electric motor 8 is activated to turn the worm 9 with a desired steering assisting force. The turns of the worm 9 are transmitted to the rack through the worm wheel 5, the pinion shaft 50 (or the output shaft) and the pinion 50a of the pinion shaft 50, so that the steering direction is changed through the not-shown tie rod connected to the rack.

### Disclosure of the Invention

### Problems to be solved by the Invention

However, the rack unit is assembled simultaneously with the pinion shaft integrated with the output shaft of the reduction unit so that its performance cannot be confirmed unless the rack unit is finally assembled into ASSY. If the performance is not achieved, the search for the cause is difficult, and the recombination takes steps.

Moreover, it is necessary to separate the fastened portion of the cover housing and the fastened portion of a rack housing. In case, therefore, the fastened portions are arranged on the outer circumference of the gear housing, the degree of freedom for the setting is limited to restrict the phase of the reduction unit relative to the rack housing thereby to raise a disadvantage in the layout such as the restriction on the position of the electric motor.

The present invention is conceived in view of the background thus far described, and has an object to provide an electric power steering device, which can easily warrant the performances of a reduction unit and a rack unit independently of each other, which can simply assemble the reduction unit and the rack unit, which can raise the degree of freedom for the fastened positions of the reduction unit and a rack housing, and which can take advantage of the layout.

Since the pinion of the pinion shaft is exposed from the EPS unit, moreover, it needs to be carefully handled against damages or dents.

The present invention is conceived in view of the background thus far described, and has an object to provide an electric power steering device, in which the reduction unit and the rack unit can be easily warranted for their performances independently of each other, which can be easily assembled and handled, and which can be lowered in its production cost.

In case, moreover, a plurality of bolts of the same kind and size are used for the fastened portion of the cover housing and the fastened portion of the rack housing, the fastened portion of the rack housing is fastened with a nut after the fastened portion of the cover housing is fastened. It is, therefore, conceivable that the fastened portion of the cover housing becomes loose at the time of fastening the nut.

### Means for solving the Problems

In order to achieve the aforementioned object, according to claim 2 of the invention, there is provided a pinion-assisted type electric power steering device, wherein
an auxiliary steering torque is generated from an electric motor in accordance with a steering torque applied to a steering wheel, decelerated by a reduction mechanism and transmitted to a pinion shaft of a steering mechanism, and
an output shaft of the reduction mechanism and the pinion shaft can be separated.

According to claim 3 of the invention, there is provided the electric power steering device, wherein
a cover housing and a gear housing for housing the output shaft of the reduction mechanism, and a rack housing for housing the pinion shaft are fastened by a common bolt.

In order to achieve the aforementioned object, according to claim 4 of the invention, there is provided a pinion-assisted type electric power steering device, wherein
an auxiliary steering torque is generated from an electric motor in accordance with a steering torque applied to a steering wheel, decelerated by a reduction mechanism and transmitted to a pinion shaft of a steering mechanism,
a torsion bar has one end connected to an input shaft and the other end connected to an output shaft, and
the output shaft and a mandrel of a worm wheel are molded integrally with each other.

According to claim 5 of the invention, there is provided the electric power steering device, wherein
a gear tooth made of a resin is formed in the outer circumference portion of a mandrel integral with the output shaft,
the mandrel integrated with the output shaft is supported by bearings to be clamped on two sides thereof, and
the mandrel integral with the output shaft has a fitting portion for jointing to the pinion shaft.

According to claim 6 of the invention, there is provided the electric power steering device, wherein
the fitting portion is of a female type.

In order to achieve the aforementioned object, according to claim 7 of the invention, there is provided a pinion-assisted type electric power steering device, wherein
an auxiliary steering torque is generated from an electric motor in accordance with a steering torque applied to a steering wheel, decelerated by a reduction mechanism and transmitted to a pinion shaft of a steering mechanism,
an output shaft of the reduction mechanism and the pinion shaft can be separated,
a gear housing, a cover housing and a rack housing are fastened by a common bolt, and
the fastened portions of the gear housing and the cover housing and the fastened portions of a reduction unit assembly thereof and the rack housing are set to have different screw diameters.

According to claim 8 of the invention, there is provided the electric power steering device, wherein
the fastened portions of the gear housing and the cover housing, and the fastened portions of a reduction unit assembly thereof and the rack housing are set to have different torsional directions of the screw.

### Effects of the Invention

According to the invention, the output shaft of the reduction mechanism and the pinion shaft can be separated so that the reduction unit and the rack unit can be easily warranted for their performances independently of each other and can be simply assembled.

Moreover, the cover housing and the gear housing for housing the output shaft of the reduction mechanism, and the rack housing for housing the pinion shaft are fastened by the common bolt. This fastening makes it possible to augment the degree of freedom for the fastened positions of the reduction unit and the rack housing. That is, it is possible to augment the degree of freedom for the position of the electric motor and to take advantage of the layout.

According to the invention, the output shaft of the reduction mechanism and the pinion shaft can be separated, but the output shaft and the mandrel of the worm wheel are molded integrally with each other. Therefore, the reduction unit and the rack unit can be easily warranted in their performances independently of each other. In case, therefore, the pinion-assisted type electric power steering device is made into the ASSY, it needs no warranty and inspection for its function. Moreover, the pinion or the functional part is not exposed to the outside so that the unit can be easily handled.

In the constitution of the worm wheel of the prior art, on the other hand, the output shaft and the mandrel of the worm wheel are made separate so that they have to be fixed by the press-fitting or the like. In the invention, on the contrary, the two components are integrally molded so that the boring treatment or the press-fitting step for the mandrel to be press-fitted can be eliminated to lower the cost. Moreover, the gearing precision for the bearing supporting unit at the time of molding the resin gear tooth can be easily attained to reduce the hobbing allowance. In the prior art, the resin gear tooth is fixedly press-fitted in the output shaft so that the precision between the bearing portion of the output shaft and the resin gear tooth is deteriorated to require a large hobbing allowance of the gear tooth.

In the joint between an EPS unit and the rack-and-pinion, the EPS unit is positioned in the female fitting portion. This is because the output shaft of the EPS unit is shaped for easy hot or cold forging operation so that the strength rise can be expected by the cold-forging hardness.

On the side of the pinion shaft, on the other hand, the male type fitting portion is preferred. This is because the strength rise by the heat treatment is required for the function of the pinion shaft and because the hardness rise by the heat treatment is also required for the jointing fitting portions in the output shaft. Generally speaking, the male side is weaker than the female side so that the male side has to be raised in strength. When the pinion shaft is carburized and hardened, therefore, the strength can be sufficiently raised merely by decarburizing the jointing fitting portions.

According to the invention, moreover, the fastened portions of the gear housing and the cover housing, and the fastened portions of the reduction unit assembly and the rack housing are set to have different thread diameters. Therefore, the loosening torque and the fastening torque can be made different to prevent the screw fastened at first from becoming loose.

When the aforementioned reduction unit assembly and the rack housing are to be fastened with the screw, therefore, the screw of the fastened portion of the aforementioned reduction unit assembly does not become loose, and the work need not be performed by holding the screw so that the working efficiency can be improved.

On the other hand, the fastened portion of the gear housing and the cover housing and the fastened portion of those reduction unit assembly and the rack housing may be set to have different torsional directions of the screw. In this case, too, similar effects can be attained.

### Best Mode for Carrying Out the Invention

An electric power steering device according to a mode of embodiment of the invention is described in the following with reference to the drawings.

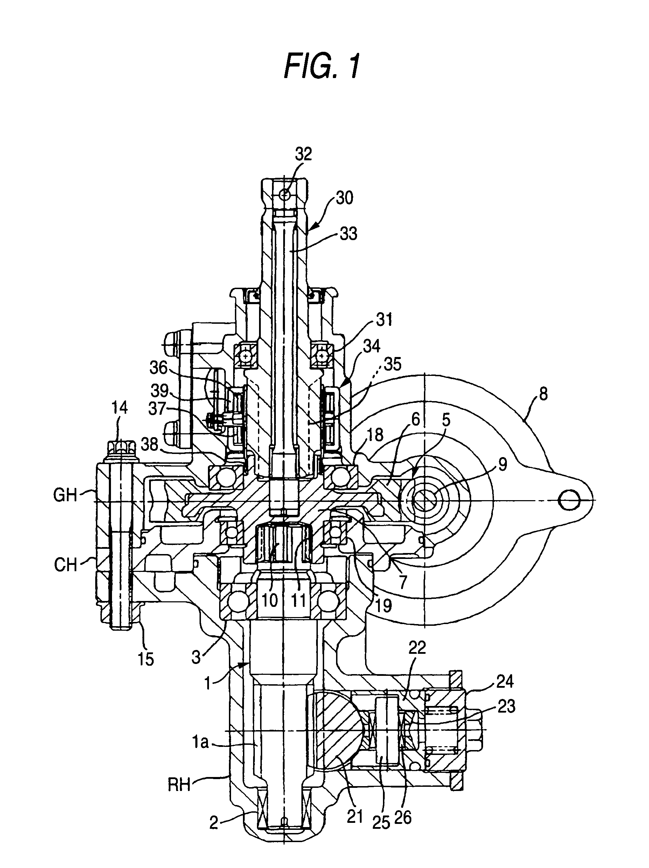

Fig. 1 is a longitudinal section of a pinion-assisted type electric power steering device according to a mode of embodiment of the invention.

In this mode of embodiment, the housing is constituted to include a rack housing RH on the lower side of a vehicle, a gear housing GH on the upper side of the vehicle, and a cover housing CH covering the gear housing GH.

In the rack housing RH, a pinion shaft 1 is turnably supported at its lower portion by a lower bearing 2 (or a needle bearing) and at its upper portion by an upper bearing 3.

A worm reduction unit is housed in the gear housing GH and the cover housing CH. The worm reduction unit has a worm wheel 5 composed of a mandrel (7) and gear tooth 6. In this mode of embodiment, the metallic mandrel (7) and the metallic output shaft 7 are molded integrally with each other.

Here, the gear tooth 6 is driven by a worm 9 connected to an electric motor 8.

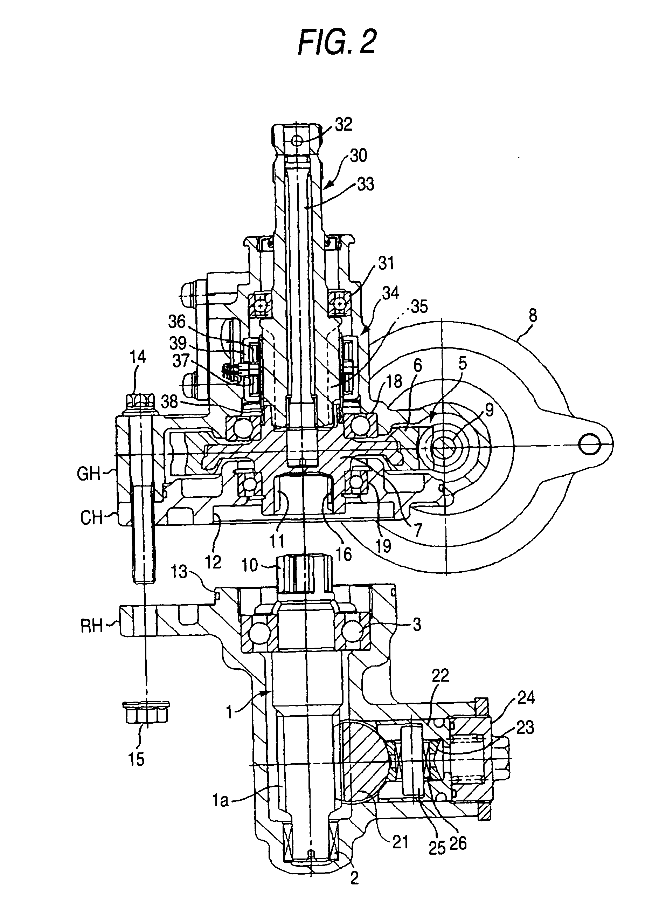

The upper end portion 10 (or a male fitting portion) of the pinion shaft 1 and the lower end portion 11 (or a female fitting portion) of the output shaft 7 are made separable, as will be detailed with reference to Fig. 2.

A rack 21 meshes with the pinion 1a of the pinion shaft 1 . A rack guide 22 normally pushes a roller 23 onto the back of the rack 21 through an adjust cover 24. The roller 23 is turnably borne on a shaft 25 by a needle bearing 26.

The adjust cover 24 pushes the roller 23 onto the back of the rack 21 through a spring. This push eliminates the backlash at the meshing portions between the pinion 20 and the rack 21 so that the rack 21 moves smoothly.

In the gear housing GH, an input shaft 30 is turnably supported through a bearing 31.

The input shaft 30 is connected to the steering wheel through the not-shown steering shaft. A torsion bar 33, which is connected at its upper end to the input shaft 30 through a pin 32, is connected by the press-fitting to the upper end portion of the output shaft 7.

A torque sensor 34 for detecting the torque to act on the torsion bar 33 is composed of a sensor shaft portion 35, detection coils 36 and 37 and a cylindrical member 38. The sensor shaft portion 35 is formed at the lower end of the input shaft 30, and the detection coils 36 and 37 are arranged in a yoke 39 press-fitted in the inner side of the sensor box. The cylindrical member 38 is arranged between the sensor shaft portion 35 and the detection coils 36 and 37.

The cylindrical member 38 is fixed on the output shaft 7, and a plurality of axially extending ridges are formed equidistantly in the circumferential direction on the sensor shaft portion 35. A plurality of rectangular apertures are formed in the cylindrical member 38 so equidistantly in the circumferential direction as to confront the detection coils 36 and 37.

When the steering wheel is operated so that the input shaft 30 is turned, its turning force is transmitted through the torsion bar 33 to the output shaft 7. At this time, a torsion is caused at the torsion bar 33 connecting the input shaft 30 and the output shaft 7 by the resistance on the steering wheel side, so that relative turns occur between the ridges of the surface of the sensor shaft portion 35 and the apertures of the cylindrical member 38. As a result of these relative turns, the magnetic flux to occur in the sensor shaft portion 35 increases/decreases, and this increase/decrease is detected as the change in inductance by the detection coils 36 and 37. The torque to act on the torsion bar 33 is detected from that detection result, and the electric motor 8 is activated to turn the worm 9 with a desired steering assisting force. The turns of the worm 9 are transmitted to the rack 21 through the worm wheel 5, the output shaft 7 and the pinion 1a of the pinion shaft 1, so that the steering direction is changed through the not-shown tie rod connected to the rack 21.

Fig. 2 is a longitudinal section showing the pinion-assisted type electric power steering device, as shown in Fig. 1, in an exploded manner.

The upper end portion 10 (or a male fitting portion) of the pinion shaft 1 and the lower end portion 11 (or a female fitting portion) of the output shaft 7 are made separable, and the mandrel (7) and the output shaft 7 are integrally molded.

Here, the output shaft 7 is desirably forged. On the other hand, the output shaft 7 is so supported by two bearings 18 and 19 as can be supported turnably but axially undisplaceably by at least one bearing.

The cover housing CH is threaded and fixed to the gear housing GH with a bolt 14, and has a faucet recess 12.

As a result, the upper reduction unit can measure the performance such as a friction or assisting torque by itself.

The bolt 14 fastens the cover housing CH and further extends through the fastened portion of the rack housing RH. The reduction unit and the rack unit are fastened, after assembled, by a nut 15 so that they are completely fixed.

On the other hand, the rack unit is composed of the rack 21, the rack housing RH, the pinion shaft 1 and the bearings 2 and 3, as described above. The rack housing RH is provided with a fastened portion for fixing the reduction unit and a faucet protrusion 13.

The pinion shaft 1 has its one end fixed axially undisplaceably but turnably by the upper bearing 3 (or the four-point contact bearing), and this bearing 3 is also fixed axially undisplaceably in the rack housing RH. The other end of the pinion shaft 1 is turnably supported by the lower bearing 2 (or the needle bearing).

The rack unit has its own function to measure the performance such as a friction or an adjust backlash.

The reduction unit and the rack unit are assembled in their individual faucet recess and protrusion 12 and 13 thereby to keep the shaft coaxial and gas-tight.

The joint portions (or the male and female fitting portions 10 and 11) of the output shaft 7 and the pinion shaft 1 of the reduction unit are provided with a plurality of corrugations, which transmit the torque when meshing with each other. Moreover, small clearances are left between those corrugations thereby to make it possible to improve the assemblability and to absorb the misalignment.

Moreover, the joint portions (or the male and female fitting portions 10 and 11) are provided with an elastic member 16 having a rigidity in the turning direction so that they are free of backlash and produce no unusual noise.

The joint portion (or the male fitting portion 10) of the pinion shaft 1 is subjected to a heat treatment so that it improves a hardness. The joint portion (or the female fitting portion 11) of the output shaft 7 of the reduction unit is plastically worked to have an improved plastic hardness.

The reduction unit and the rack unit having their individual performances warranted are assembled to make it possible to lower the fraction defective and to reduce the step number.

In the mode of embodiment thus far described, the output shaft 7 and the pinion shaft 1 can be separated so that the reduction unit and the rack unit can be easily warranted for their performances independently of each other and can be simply assembled.

Moreover, the cover housing CH and the gear housing GH for housing the output shaft 7 and the rack housing RH for housing the pinion shaft 1 are fastened by the common bolt 14. This fastening makes it possible to augment the degree of freedom for the fastened positions of the housings CH and GH on the reduction unit side and the rack housing RH. That is, it is possible to augment the degree of freedom for the position of the electric motor 8 and to take advantage of the layout.

Fig. 3(a) is a view, as taken from the rack side, of the pinion-assisted type electric power steering device shown in Fig. 1, and Fig. 3(b) is a view, as taken from the rack side, of the pinion-assisted type electric power steering device according to the conventional art.

In this mode of embodiment, the cover housing CH and the gear housing GH, and the rack housing RH are fastened by the common bolt 14 and nut 15 so that the number of the bolt/nut can be made less than that of the conventional art.

Fig. 4 is a longitudinal section of a pinion-assisted type electric power steering device according to a modification of the mode of embodiment of the invention.

In this modification, the bolt 14 is made such that the thread for fastening the cover housing CH is smaller in size than the thread (or a diametrically smaller portion 14b) for fastening the rack housing RH. This size makes their fastening torques so different as to prevent the bolt from being turned at the time of fastening the rack housing RH.

Moreover, the radially smaller portion 14b can provide a reference for assembling the rack housing RH.

The thread working length can be shortened to lower the cost. In addition, the short thread can shorten the time period for fastening and assembling the gear housing GH and the cover housing CH. The gear housing GH, the cover housing CH and the rack housing RH can have their fastened portions in phase thereby to raise the degree of freedom for the fixing phase of the gear housing GH.

The invention should not be limited to the aforementioned modes of embodiment but can be modified in various manners.

Moreover, the mandrel 7 (or the output shaft) is so supported by the bearings 18 and 19 as is clamped on its two sides. Here, the mandrel 7 (or the output shaft) has a reference diameter clamping the resin gear tooth 6, as the supporting portion at the time of molding the gear tooth 6. This reference diameter is shared with the bearing supporting portion of the mandrel 7 (or the output shaft), thereby to improve the precision for molding the resin gear tooth 6.

According to this mode of embodiment thus far described, the mandrel 7 (or the output shaft) of the reduction mechanism and the pinion shaft 1 can be separated, but the output shaft (7) and the mandrel 7 of the worm wheel 5 are molded integrally with each other. Therefore, the reduction unit and the rack unit can be easily warranted in their performances independently of each other. In case, therefore, the pinion-assisted type electric power steering device is made into the ASSY, it needs no warranty and inspection for its function. Moreover, the pinion 1a or the functional part is not exposed to the outside so that the unit can be easily handled.

In the constitution of the worm wheel 5 of the prior art, on the other hand, the output shaft and the mandrel of the worm wheel 5 are made separate so that they have to be fixed by the press-fitting or the like.

In this mode of embodiment, on the contrary, the two components are integrally molded so that the boring treatment or the press-fitting step for the mandrel 7 (or the output shaft) to be press-fitted can be eliminated to lower the cost. Moreover, the gearing precision for the bearing supporting unit at the time of molding the resin gear tooth 6 can be easily attained to reduce the hobbing allowance. In the prior art, the resin gear tooth 6 is fixedly press-fitted in the mandrel 7 (or the output shaft) so that the precision between the bearing portion of the mandrel 7 (or the output shaft) and the resin gear tooth 6 is deteriorated to require a large hobbing allowance of the gear tooth 6.

In the joint between an EPS unit and the rack-and-pinion, the EPS unit is positioned in the female fitting portion 11 (or the lower end portion). This is because the mandrel 7 (or the output shaft) of the EPS unit is shaped for easy hot or cold forging operation so that the strength rise can be expected by the cold-forging hardness.

On the side of the pinion shaft 1, on the other hand, the male type fitting portion 10 (or the upper end portion) is preferred. This is because the strength rise by the heat treatment is required for the function of the pinion shaft 1 and because the hardness rise by the heat treatment is also required for the male and female fitting portions (10, 11) in the mandrel 7 (or the output shaft). Generally speaking, the male side is weaker than the female side so that the male side has to be raised in strength. When the pinion shaft 1 is carburized and hardened, therefore, the strength can be sufficiently raised merely by decarburizing the male and female fitting portions (10, 11).

Here, the invention should not be limited to the aforementioned modes of embodiment but can be modified in various manners.

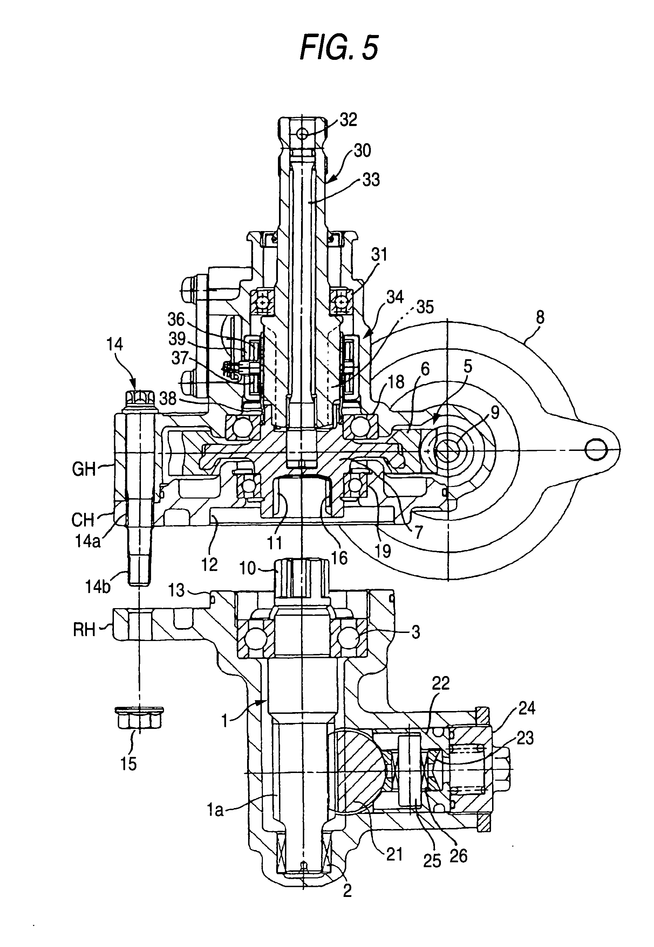

Fig. 5 is a longitudinal section of a pinion-assisted type electric power steering device according to the mode of embodiment of the invention, and presents an exploded state.

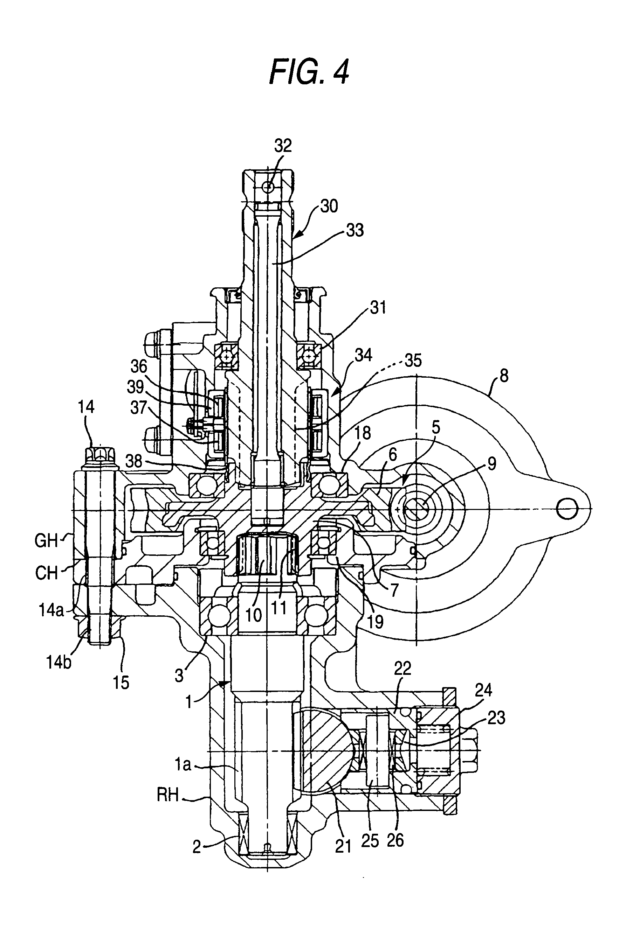

Fig. 4 is a longitudinal section of the pinion-assisted type electric power steering device according to the mode of embodiment of the invention, and presents an assembled state.

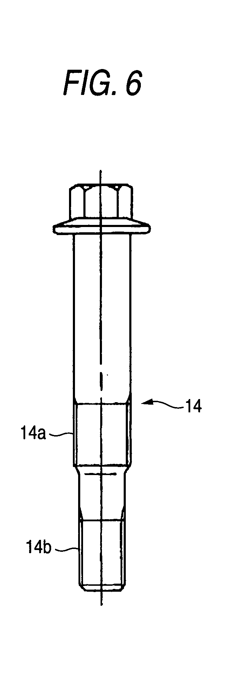

Fig. 6 is a side elevation of a bolt to be used for assembling the pinion-assisted type electric power steering device according to the mode of embodiment of the invention.

The upper end portion 10 (or the male fitting portion) of the pinion shaft 1 and the lower end portion 11 (or the female fitting portion) of the output shaft 7 are so separably constituted as is described later in detail with reference to Fig. 5.

As shown in Fig. 5, the upper end portion 10 (or the male fitting portion) of the pinion shaft 1 and the lower end portion 11 (or the female fitting portion) of the output shaft 7 are separably constituted.

In this mode of embodiment, moreover, the bolt 14 is made such that the thread (or a diametrically larger portion 14a) for fastening the cover housing CH is smaller in size than the thread (or the diametrically smaller diameter 14b) for fastening the rack housing RH. This size makes their fastening torques so different as to prevent the bolt from being turned at the time of fastening the rack housing RH.

Moreover, the radially smaller portion 14b can provide a reference for assembling the rack housing RH.

The thread working length can be shortened to lower the cost. In addition, the short thread can shorten the time period for fastening and assembling the gear housing GH and the cover housing CH.

According to this mode of embodiment, the fastened portions of the gear housing GH and the cover housing CH, and the fastened portions of the reduction unit assembly (GH, CH) and the rack housing RH are set to have different thread diameters. Specifically, the bolt 14 has the thread (or the diametrically larger portion 14a) for fastening the cover housing CH and the thread (or the diametrically smaller portion 14b) for fastening the rack housing RH. As a result, the loosening torque and the fastening torque can be made different to prevent the screw (or the diametrically larger portion 14a) fastened at first from becoming loose.

When the reduction unit assembly (GH, CH) and the rack housing RH are to be fastened with the screw (or the diametrically smaller portion 14b), therefore, the screw (or the diametrically larger portion 14a) of the reduction unit assembly (GH, CH) does not become loose, and the work need not be performed by holding the screw (or the diametrically smaller portion 14b) so that the working efficiency can be improved.

On the other hand, the fastened portion of the gear housing GH and the cover housing CH and the fastened portion of those reduction unit assembly (GH, CH) and the rack housing RH may be set to have different torsional directions of the screw (of the diametrically larger portion 14a and the diametrically smaller portion 14b) of the bolt. Similar effects can also be attained in this case.

Here, the invention should not be limited to the modes of embodiment thus far described but can be modified in various manners.

### Brief Description of the Drawings

[Fig. 1]
   Fig. 1 is a longitudinal section of a pinion-assisted type electric power steering device according to a mode of embodiment of the invention.
[Fig. 2]
   Fig. 2 is a longitudinal section showing the pinion-assisted type electric power steering device, as shown in Fig. 1, in an exploded manner.
[Fig. 3]

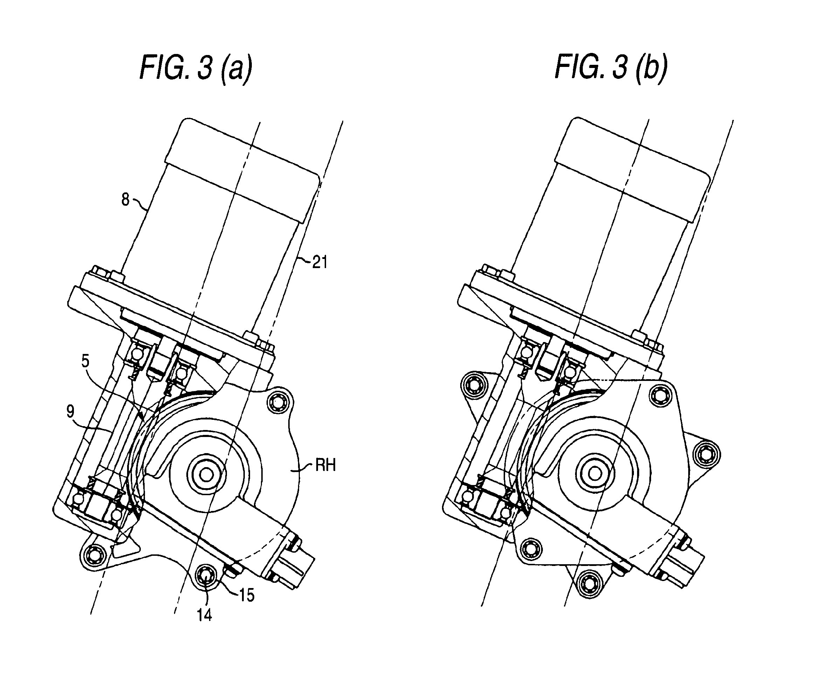

   Fig. 3(a) is a view, as taken from the rack side, of the pinion-assisted type electric power steering device shown in Fig. 1, and Fig. 3(b) is a view, as taken from the rack side, of the pinion-assisted type electric power steering device according to the conventional art.
[Fig. 4]
   Fig. 4 is a longitudinal section of the pinion-assisted type electric power steering device according to the mode of embodiment of the invention, and presents an assembled state.
[Fig. 5]
   Fig. 5 is a longitudinal section of a pinion-assisted type electric power steering device according to the mode of embodiment of the invention, and presents an exploded state.
[Fig. 6]
   Fig. 6 is a side elevation of a bolt to be used for assembling the pinion-assisted type electric power steering device according to the mode of embodiment of the invention.
[Fig. 7]
   Fig. 7 is a longitudinal section of a pinion-assisted type electric power steering device according to the conventional art.

### Description of Reference Numerals and Signs

- CH: Cover Housing
- GH: Gear Housing
- RH: Rack Housing
- 1: Pinion Shaft
- 2: Lower Bearing
- 3: Upper Bearing
- 5: Worm Wheel
- 6: Gear Tooth
- 7: Output Shaft (Mandrel)
- 8: Electric Motor
- 9: Worm
- 10: Male Fitting Portion
- 11: Female Fitting Portion
- 12: Faucet Recess
- 13: Faucet Protrusion
- 14: Bolt
- 14a: Diametrically Larger Portion
- 14b: Diametrically Smaller Portion
- 15: Nut
- 16: Elastic Member
- 18, 19: Bearing
- 1a: Pinion
- 21: Rack
- 22: Rack Guide
- 23: Roller
- 24: Adjust Cover
- 25: Shaft
- 26: Needle Bearing
- 27: Upper Bearing
- 30: Input Shaft
- 31: Bearing
- 32: Pin
- 33: Torsion Bar
- 34: Torque Sensor
- 35: Sensor Shaft Portion
- 36, 37: Detection Coil
- 38: Cylindrical Member
- 39: Yoke

## Claims

1. A pinion-assisted type electric power steering device, wherein
an auxiliary steering torque is generated from an electric motor in accordance with a steering torque applied to a steering wheel, decelerated by a reduction mechanism and transmitted to a pinion shaft of a steering mechanism.

2. A pinion-assisted type electric power steering device, wherein
an auxiliary steering torque is generated from an electric motor in accordance with a steering torque applied to a steering wheel, decelerated by a reduction mechanism and transmitted to a pinion shaft of a steering mechanism, and
an output shaft of the reduction mechanism and the pinion shaft can be separated.

3. The electric power steering device as set forth in claim 2, wherein
a cover housing and a gear housing for housing the output shaft of the reduction mechanism, and a rack housing for housing the pinion shaft are fastened by a common bolt.

4. A pinion-assisted type electric power steering device, wherein
an auxiliary steering torque is generated from an electric motor in accordance with a steering torque applied to a steering wheel, decelerated by a reduction mechanism and transmitted to a pinion shaft of a steering mechanism,
a torsion bar has one end connected to an input shaft and the other end connected to an output shaft, and
the output shaft and a mandrel of a worm wheel are molded integrally with each other.

5. The electric power steering device as set forth in claim 4, wherein
a gear tooth made of a resin is formed in the outer circumference portion of a mandrel integral with the output shaft,
the mandrel integrated with the output shaft is supported by bearings to be clamped on two sides thereof, and
the mandrel integral with the output shaft has a fitting portion for jointing to the pinion shaft.

6. The electric power steering device as set forth in claim 5, wherein
the fitting portion is of a female type.

7. A pinion-assisted type electric power steering device, wherein
an auxiliary steering torque is generated from an electric motor in accordance with a steering torque applied to a steering wheel, decelerated by a reduction mechanism and transmitted to a pinion shaft of a steering mechanism,
an output shaft of the reduction mechanism and the pinion shaft can be separated,
a gear housing, a cover housing and a rack housing are fastened by a common bolt, and
the fastened portions of the gear housing and the cover housing and the fastened portions of a reduction unit assembly thereof and the rack housing are set to have different screw diameters.

8. The electric power steering device as set forth in claim 7, wherein
the fastened portions of the gear housing and the cover housing, and the fastened portions of a reduction unit assembly thereof and the rack housing are set to have different torsional directions of the screw.
